Europäisches Patentamt

European Patent Office

Office européen des brevets

(19)

(11) Veröffentlichungsnummer: **0 050 312**
**A2**

(12) # EUROPÄISCHE PATENTANMELDUNG

(21) Anmeldenummer: 81108344.3

(22) Anmeldetag: 15.10.81

(51) Int. Cl.³: **B 01 F 5/04,** B 01 F 5/00,
B 01 F 3/12, B 01 F 1/00,
C 08 J 3/04, B 04 C 3/00

(30) Priorität: 20.10.80 DE 3039510

(43) Veröffentlichungstag der Anmeldung: 28.04.82
Patentblatt 82/17

(84) Benannte Vertragsstaaten: **BE DE FR GB IT NL**

(71) Anmelder: **HOECHST AKTIENGESELLSCHAFT,
Postfach 80 03 20, D-6230 Frankfurt/Main 80 (DE)**

(72) Erfinder: **Müller, Walter, Dr., Im Stückes 68,
D-6233 Kelkheim (Taunus) (DE)**
Erfinder: **Interthal, Werner, Dr.,
Dr.-Ludwig-Opel-Strasse 62, D-6090 Rüsselsheim (DE)**
Erfinder: **Wilski, Hans, Dr., Händelstrasse 18, D-6232 Bad
Soden am Taunus (DE)**

(54) **Vorrichtung und Verfahren zum Dispergieren und Lösen von Polymerpulvern.**

(57) Vorrichtung zum Dispergieren von Polymerpulvern, wie sie die Figur zeigt, die aus einem Trichter (1) mit zentraler Einfüllöffnung (2), in dessen oberem Teil mindestens eine tangentiale Flüssigkeitszufuhr (3) angeordnet ist, einem Trichterablaufrohr (4) mit Ringdüse (5) und einer anschließenden Strahlpumpe (6) besteht sowie Verfahren zum Lösen von Polymerpulvern, dadurch gekennzeichnet, daß man das Polymerpulver in der oben beschriebenen Vorrichtung dispergiert und die Dispersion in einer turbulenten Strömung des Lösemittels auflöst.

HOECHST AKTIENGESELLSCHAFT          HOE 80/F  239   Dr. OT/mh

Vorrichtung und Verfahren zum Dispergieren und Lösen von
Polymerpulvern

Das Auflösen von festen Stoffen in Flüssigkeiten bereitet
immer dann Schwierigkeiten, wenn die zu lösenden Stoffe bei
der Berührung mit dem Lösemittel klebrig werden und anschließend zusammenklumpen. Die gebildeten Klumpen nehmen in
manchen Fällen Lösungsmittel auf und formen sich dabei in
mehr oder weniger feste Gelklumpen (Schleimklumpen,
"Quaddeln") um, die in der Praxis kaum noch in Lösung zu
bringen sind. Zu den Verbindungen, die beim Auflösen besondere Schwierigkeiten bereiten, gehören vor allem die Hochpolymeren, und zwar sowohl anorganische wie organische. Man
kann solche Hochpolymere beispielsweise auflösen, indem man
sie als feinpulvrige Substanz sehr langsam in das stark
gerührte Lösungsmittel einstreut. Dieses einfache Verfahren
ist aber immer dann nicht anwendbar, wenn große Mengen eines
stark quellenden Polymere in kurzer Zeit aufgelöst werden
müssen, oder wenn besonders empfindliche Verbindungen (z.B.
Produkte mit sehr hohem Molekulargewicht) durch das starke
Rühren einem Scherabbau unterworfen und dadurch beim Auflösen
zerstört werden. Das Auflösen eines wertvollen hochmolekularen Stoffes führt in diesen Fällen zu der wertlosen Lösung
eines niedermolekularen Abbauproduktes.

Ein anderes bekanntes Löseverfahren besteht darin, hochmolekulare Stoffe mit wenig Lösungsmittel anzuquellen und die
auf diese Weise absichtlich erzeugten Gele in einem Kneter
oder einem Extruder mit Lösemittel zu verdünnen. Dieses
Verfahren hat die gleichen Nachteile wie das vorher beschriebene. Die mit Aggregaten vertretbarer Größe erzielbaren
Durchsätze sind gering  und der Scherabbau ist bei hochmolekularen Verbindungen so erheblich, daß wieder eine wertlose
niedermolekulare Lösung entsteht.

Ein Fortschritt im Hinblick auf ein einfaches und schonendes Lösen ist für das Beispiel des Polyacrylamids in DE-AS 2 143 549 und DE-OS 2 343 179 beschrieben. Hiernach werden wasserhaltige, hydrophob gepuderte Gelteilchen von einigen Millimetern Durchmesser ("Granulat-Körner") aus Polyacrylamid hergestellt. Diese Teilchen lassen sich problemlos unter langsamem Rühren in Wasser lösen, ohne daß es zu der gefürchteten Quaddelbildung kommt. Durch das langsame Rühren wird ein Scherabbau vermieden, doch der Nachteil der geringen Lösegeschwindigkeit ist bei diesem Verfahren wegen der geringen spezifischen Oberfläche des Granulats besonders ausgeprägt. So sind beispielsweise für das Herstellen einer 0,5 %igen wäßrigen Lösung einige Stunden Rührzeit erforderlich.

Man kann auch stabile Suspensionen aus dem zu lösenden Polymerpulver in nicht lösenden Flüssigkeiten herstellen, und diese Suspensionen dann in das stark bewegte Lösemittel einspeisen (DE-OS 2 208 519). Dieses Verfahren setzt jedoch voraus, daß eine geeignete nicht lösende Flüssigkeit als Suspensionsmittel gefunden werden kann, die sich mit dem Lösemittel mischt und für eventuelle Folgereaktionen, gegebenenfalls auch im Hinblick auf den Umweltschutz, unbedenklich ist. Schließlich hängt die Wirtschaftlichkeit eines solchen Verfahrens vom Preis und der Verfügbarkeit des Suspensionsmittels ab. Dieses Verfahren muß daher auf seltene Spezialfälle beschränkt bleiben.

Bei der Aufbereitung von Abwässern werden häufig flockend wirkende Polymerlösungen eingesetzt. Es ist bekannt, für die Herstellung dieser Lösungen sogenannte Einspültrichter zu verwenden. In diesen Fällen läßt man das Polymerpulver in einen mit Wasser gespülten Trichter rieseln; das Wasser-Polymer-Gemisch fließt dann in einen Vorratsbehälter, in dem das Polymere unter Rühren langsam in Lösung gebracht wird (vgl. z.B. die Firmenschriften 1) "Polyprep Bereitungs- und Dosieranlage für Polyelektrolytlösungen" 7/76, Wallace & Tiernan GmbH, 8870 Günzburg. 2) "Spezialinformation 4.03.05 Trichter-Lösegerät" Chemische Fabrik Stockhausen & Cie., 4150 Krefeld).

Nach einer anderen Methode wird das Pulver mit einem Luftstrom hoher Gesschwindigkeit vordispergiert. Der erzeugte Staubstrom wird dann in eine Benetzungseinheit und schließlich wieder in ein Rührgefäß geleitet. Der Luftstrom wirkt bei dieser Verfahrensweise stabilisierend und vermindert die Gefahr des Rückspritzens und der Ansatzbildung (vgl. z.B. die Firmenschriften 1) "Dosier und Auflösesystem für feste und flüssige Polyelektrolyte 202.1" Gericke, 7700 Singen. 2) "Spezialinformation 4.03.06 Druckluft-Lösegerät" Chemische Fabrik Stockhausen & Cie., 4150 Krefeld).

Auch diese beiden verfeinerten Löseverfahren arbeiten letztlich mit der geringen Lösegeschwindigkeit des Rührkessels. Das zuletzt genannte Verfahren läßt sich darüber hinaus nur dann anwenden, wenn eine Möglichkeit zur Abscheidung der mitgeführten Luft besteht.

Bei der Verwendung von Hochpolymeren als Strömungsbeschleuniger steht man in vielen Fällen vor der Aufgabe, große Mengen dieser Substanzen in kurzer Zeit schonend, d.h. ohne Verkleinerung des Molekulargewichtes, in Lösung zu bringen. Die Notwendigkeit des Lösens großer Mengen ergibt sich bei den in der Praxis üblichen Durchsätzen für Erdöl oder beim hydraulischen Feststofftransport, bei dem Sande, Kiese, Kohlen oder Erze mit Wasser transportiert werden sowie beim hydraulischen Kapseltransport. Bei einem Verbrauch an Strömungsbeschleuniger von 500 kg/h, wie er bei dem hydraulischen Sandtransport (z.B. beim Aufspülen von Straßendämmen, Deichen usw.) in Frage kommt, ist ein Lösen des Strömungsbeschleunigers nach dem vorher beschriebenen Verfahren technisch und wirtschaftlich nicht möglich. Es müßten bewegliche Tankkapazitäten von 600 bis 1000 m$^3$ Fassungsvermögen mit den entsprechenden Rühreinrichtungen bereitgestellt werden, um eine Lösung mit einer Konzentration von etwa 0,5 Gew.-% herzustellen. Die Herstellung wesentlich höherer Konzentrationen mit dem Ziel, Tankkapazität einzusparen, verbietet sich von selbst, da diese höher konzentrierten Lösungen so zähflüssig sind, daß man sie nicht mehr durch Rühren homogenisieren und verdünnen kann.

In dieser Situation erschien es notwendig, ein Verfahren und eine Vorrichtung zu schaffen, mit der es möglich ist, Mengen von 10 bis 1000 kg/h an hochmolekularem Strömungsbeschleuniger schonend in Lösung zu bringen und in Transportleitungen einzuspeisen und dabei den aufwendigen Weg des Herstellens von Lösungen in großen Rührkesseln zu vermeiden. Überraschenderweise wurde nun gefunden, daß sich Polymerpulver, die sich sonst nur langsam lösen, sehr schnell und schonend in Lösung gebracht werden können, und zwar auch in sehr großen Mengen, wenn man das Polymerpulver zuvor dispergiert und diese Dispersion dann in eine turbulente Strömung des Lösemittels einspeist.

Gegenstand der Erfindung ist daher ein Verfahren zum Lösen von Polymerpulver in einem Lösungsmittel, das dadurch gekennzeichnet ist, daß man das Polymerpulver zunächst dispergiert und die Dispersion anschließend in einer turbulenten Strömung des Lösemittels auflöst. Gegenstand der Erfindung ist außerdem eine Vorrichtung zum Dispergieren von Polymerpulvern in einem Lösemittel bestehend im wesentlichen aus einem Trichter mit Einfüllöffnung und tangentialer Flüssigkeitszufuhr, einem Ablaufrohr mit Ringdüse und einer Strahlpumpe.

Im folgenden wird die Erfindung an einer lediglich einen Ausführungsweg darstellenden Figur näher erläutert. Diese Figur zeigt den Querschnitt einer erfindungsgemäßen Vorrichtung. Hierbei wird das zu lösende Polymerpulver durch die Einfüllöffnung (2) in den Trichter (1) gegeben. Dieser Trichter trägt in seinem oberen Teil ein oder mehrere, vorzugsweise vier Einlaßöffnungen (3) für eine tangentiale Flüssigkeitszufuhr. Diese tangential zugeleitete Flüssigkeit sorgt für eine Benetzung und Ausspülung des Pulvers aus dem Trichter sowie für eine Vordispergierung. Das anschließende Auslaufrohr (4) des Trichters bildet mit Teil (5) eine Ringdüse. Sie hat die Aufgabe, die Wand des Auslaufrohres so

- 5 -

intensiv zu bespülen, daß eine Ansatzbildung durch die sich auflösenden, klebenden Pulverteilchen verhindert wird. Außerdem erfolgt an dieser Stelle eine weitere Verdünnung.

Da die Benetzung des Pulvers im Trichter ohne ein mechanisch einwirkendes Werkzeug erfolgt, und aus Gründen einer kompakten Bauweise und eines möglichst gering gehaltenen Ballaststromes der Dispergierflüssigkeit ein hoher Durchsatz an Polymerpulver bevorzugt wird, kann im Trichter eine schwache Agglomeratbildung auftreten. Um diese Agglomerate sofort wieder zu zerteilen, ist eine mechanische Beanspruchung notwendig, was durch die Strahlpumpe (6) erreicht wird. In der Strahlpumpe findet ein verlustbehafteter Impulsaustausch zwischen Treibstrom und Saugstrom statt, der zur Dispergierung des Pulvers genutzt wird. Die sich bildende feinteilige Dispersion wird direkt in die Transportleitung geleitet, wo dann der Lösevorgang stattfindet.

Man kann den Ausgang der Strahlpumpe auch mit einer Diffusorerweiterung versehen. Der aus dem Strömungsimpuls rückgewinnbare Druck kann dann genutzt werden, um gegen einen geringen Gegendruck ($<$ 1 bar) zu fördern.

Soll gegen einen höheren Druck gefördert werden, so ist eine geeignete Druckerhöhungspumpe der Strahlumpe nachzuschalten. Da geringe Anteil des Pulvers bereits in der Dispergiervorrichtung teilweise gelöst werden können und infolgedessen scherempfindlich sind, sind Pumpen zu verwenden, die eine geringe Scherwirkung ausüben. Als geeignet haben sich Pumpen mit verdrängender Wirkung erwiesen.

Für die drei bei (3), (5) und (6) zugeleiteten Flüssigkeitsströme wird man in der Regel die gleiche Flüssigkeit wählen, wie sie auch in der Transportleitung strömt. Man kann jedoch auch eine spezielle Dispergierflüssigkeit nehmen, die dann bei (3) oder z.B. bei (3) und (5) in die Apparatur eingeführt wird.

- 6 -

Die erfindungsgemäße Vorrichtung benötigt mit allen Hilfseinrichtungen - je nach Bauweise - ein Volumen von nur etwa
2 m³. Sie ist daher leicht zu transportieren und an jeder
beliebigen Baustelle einzustzen. Sie eignet sich aber wegen
ihres geringen Platzbedarfs auch für den Einbau in Schiffe,
speziell Spülschiffe. Der geringe Platzbedarf von nur etwa 2
m³ erscheint dann besonders vorteilhaft, wenn man ihn mit
de Platzbedarf eines Rührkessels gleicher Leitung, der 600
bis 1000 m³ benötigt, vergleicht. Es ist unmittelbar
einzusehen, daß die kompakte Bauweise der erfindungsgemäßen
Dispergierstation den Einsatz von Strömungsbeschleunigern in
großem Maßstab überhaupt erst möglich macht.

Die erfindungsgemäße Vorrichtung kommt infrage zum Dispergieren von Hochpolymeren in Pulverform, insbesondere von
solchen Polymeren, die stark quellen und Agglomerate bilden.
Beispiele für solche Polymere sind Polyethylenoxide, Polyphosphate und Cellulose und deren Derivate, wie etwa Methylcellulose. Besondere Bedeutung hat das erfindungsgemäße
Verfahren bzw. Vorrichtung für das Dispergieren und anschließende Lösen von sogenannten Strömungsbeschleunigern wie
Polyacrylamide oder teilverseifte Polyacrylamide. Auf diesem
Gebiet ist der Einsatz der erfindungsgemäßen Vorrichtung
deshalb von besonderem Interesse, da man auf diese Weise
ohne großen apparativen Aufwand den Strömungsbeschleuniger
kontinuierlich und schnell in der Transportleitung auflösen
kann, ohne daß es zur Bildung von Agglomeraten kommt. Die
relativen Richtmengendurchsätze an Flüssigkeit in der
erfindungsgemäßen Vorrichtung (bezogen auf den Pulverdurchsatz) betragen 1,5 bis 2 für die bei (3), 5 bis 9 für die
bei (5) und 10 bis 20 für die bei (6) eintretenden Flüssigkeitsströme. So können beispielseise in der geschilderten
Vorrichtung 650 kg/h Pulver durchsetzt werden, wenn der
Durchmesser des Trichterablaufrohres 40 mm beträgt.

Von besonderer Bedeutung für das erfindungsgemäße Verfahren
ist die Korngrößenverteilung des aufzulösenden Polymerpulvers.

Der optimale Korngrößenbereich hängt von der Lösegeschwindigkeit und damit von der chemischen Natur des Pulvers und des Lösemittels ab und läßt sich leicht durch Vorversuche finden. Für das Lösen eines nach DE-OS 2 059 241 hergestellten, getrockneten und gemahlenen Polyacrylamids in Wasser ist beispielsweise der Korngrößenbereich 70 bis 700, vorzugs-weise 200 bis 500 $\mu$m besonders vorteilhaft. Bei zu feinem Korn, beispielsweise 50 bis 100 $\mu$m, lösen sich selbst bei der kurzen Verweilzeit innerhalb der Apparatur (bis zu 5 Sekunden) schon erheblich Anteile, so daß eine Dispersion des restlichen, noch ungelösten Pulvers in einer zähflüssigen Lösung entsteht. Die Zähigkeit dieser Lösung kann bei sehr feinem Korn so groß werden, daß der Apparat verstopft. Ein weiterer Nachteil von zu feinem Korn ist das Auftreten von Flugstaub bei der Zuführung des Materials. Zu grobkörniges Pulver dagegen löst sich zu langsam auf, so daß quellende Gelteilchen entstehen, die miteinander verkleben und Agglomerate bilden können. Bis zu einem gewissen Grade kann man den ungünstigen Einfluß einer nicht optimalen Korngrößenverteilung durch die Stärke der bei (3) und (5) eintretenden Flüssigkeitsströme korrigieren. Hierauf beruht z.T. die Betriebssicherheit der erfindungsgemäßen Vorrichtung.

### Beispiel 1

Aus einem Fluß wurde über einen Grobfilter mit einer Pumpe Wasser angesaugt und durch eine 950 m lange Schlauchleitung von 75 mm Innendurchmesser gedrückt. Das Wasser floß anschließend an einer stromabwärts gelegenen Stelle in den Fluß zurück. Der Durchfluß durch die Schlauchleitung wurde mit einer vor der Dispergiervorrichtung angeordneten Meßblende gemessen und der Druck in der Leitung wurde in bestimmten Abständen mit üblichen Monometern gemessen. Als Strömungsbeschleuniger wurde ein hochmolekulares, teilverseiftes Polyacrylamid verwendet (Polymer I aus Beispiel 1 der DE-OS 28 07 709). Dieses Material lag in Pulverform vor mit einem Kornbereich von 50 bis 500 μm und bestand zu 62 % aus teilverseiftem Polyacrylamid und zu 13 % aus Wasser. Die Pulverteilchen waren mit Stärke gepudert. Der Stärkeanteil an der Gesamtmasse betrug 25 %. Dieses teilverseifte Polyacrylamid wurde in der in der Zeichnung dargestellten Vorrichtung gelöst, wobei diese Lösung saugseitig, d.h. ohne Einschaltung einer Pumpe zur Druckerhöhung in die Schlauchleitung eingepreßt wurde. Für die drei Teilströme der Lösevorrichtung wurde ebenfalls filtriertes Flußwasser benutzt. Nach 4 Stunden ununterbrochenem, störungsfreiem Betrieb wurde sie abgeschaltet. Während dieser Zeit ergaben sich folgende Meßwerte.

| Konzentration Strömungsbeschleuniger | Durchsatz Wasser | Druck nach 92 m Leitung | Reibungsminderung |
|---|---|---|---|
| ppm | $m^3$/h | bar | % |
| 0 | 41,5 | 9,6 | - |
| 20 | 54,6 | 8,3 | 47 |

Man erkennt, daß ein Zusatz von 20 ppm des teilverseiften Polyacrylamids, als Pulver mittels der erfindungsgemäßen Vorrichtung gelöst und zudosiert, eine Reibungsminderung von 47 % ergibt. Den gleichen Effekt erhält man, wenn man das teilverseifte Polyacrylamid in Form einer 0,5 %igen Stammlösung zudosiert. Diese Stammlösung muß jedoch zuvor durch dreistündiges Rühren hergestellt werden. Dies zeigt, daß in der erfindungsgemäßen Vorrichtung das Pulver schnell, vollständig und ohne jeden Abbau aufgelöst wird.

## Beispiel 2

In der in Beispiel 1 beschriebenen Anordnung wurde die in der Zeichnung dargestellte Dispergiervorrichtung betrieben mit gepudertem, teilverseiftem Polyacrylamid entsprechend dem in Beispiel 1 benutzten Produkt, jedoch mit verschiedener Korngrößenverteilung. Die einzelnen Kornfraktionen wurden durch Sieben gewonnen. Es ergaben sich hierbei folgende Ergebnisse:

| Kornfraktion/Konzentration teilverseiftes Polyacrylamid | | Durchsatz Wasser | Druck nach 92 m Leitung | Reibungs- minderung |
|---|---|---|---|---|
| $\mu$m | ppm | $m^3$/h | bar | % |
| - | 0 | 41,8 | 9,3 | - |
| 130 - 500 | 20 | 50,4 | 8,2 | 40 |
| 300 - 800 | 20 | 48,3 | 8,5 | 32 |
| 800 - 1000 | 20 | 42,0 | 9,2 | 0 |

Man erkennt an den Meßwerten, daß die Kornfraktion 130 bis 500 $\mu$m (bei konstantem Pumpenlauf) den größten Durchsatz bei gleichzeitig kleinstem Druckabfall liefert. Damit ist auch die Reibungsminderung in diesem Fall optimal. Die Kornfraktion 800 bis 1000 $\mu$m brachte keine Reibungsminderung, da sich die verhältnismäßig groben Körner in der zur Verfügung stehenden Zeit nicht auflösen konnten.

## Beispiel 3

Die in Beispiel 1 beschriebene Anordnung wurde mit einem pulverförmigen, nicht gepuderten, teilverseiftem Polyacrylamid betrieben, das unter dem Namen [R]Bozefloc A 31 von

- 10 -

Société Française Hoechst und Benckiser-Knapsack vertrieben wird. Bei einer Konzentration von 20 ppm Polyacrylamid ergab sich unter sonst gleichen Bedingungen eine Reibungsminderung von 20 %.

Beispiel 4

Auf einer an einem Fluß gelegenen Baustelle zur hydraulischen Förderung von Sand mit einer Rohrleitungslänge von 3000 m und einem inneren Rohrdurchmesser von 750 mm wurde ein Sand-Wasser-Gemisch mit 25 Vol.-% Sand gefördert. Zur Verbesserung des Sandtransportes wurde die erfindungsgemäße Apparatur, wie sie in der Zeichnung dargestellt ist, unter Verwendung des Polymers I aus Beispiel 1 der DE-OS 28 07 709 eingesetzt. Der Flüssigkeitsstrom bei 3 der Dispergiervorrichtung betrug während des Versuches 900 l/h, der Strom bei 4   3300 l/h und der Strom bei 6   7300 l/h. Für alle drei Ströme wurde das gleiche, grob filtrierte Flußwasser verwendet. Der Durchsatz an teilverseiftem Polyacrylamid betrug 510 kg/h (brutto) bzw. 316 kg/h (netto). Zur Druckerhöhung wurde der Dispergierstation eine Exzenterschneckenpumpe nachgeschaltet.
Durch den Einsatz von 40 g Strömungsbeschleuniger pro $m^3$ Sand-Wasser-Gemisch ließ sich - bei sonst gleichem Betrieb - die Strömungsgeschwindigkeit von 3,3 m/s auf 5,6 m/s steigern. Dies entspricht einer Geschwindigkeits- und damit auch Durchsatzsteigerung von 69 %. Die Apparatur arbeitete 10 Stunden lang wartungs- und störungsfrei und wurde dann abgeschaltet.

Beispiel 5

Es wurde in der gleichen Weise wie in Beispiel 4 gearbeitet, doch wurde auf die Druckerhöhungspumpe verzichtet. Da der von der Dispergierstation erzeugte Druck nicht mehr ausreichte, um die Lösung des Strömungsbeschleunigers in die unter Druck stehende Leitung einzupressen, wurde die Dispersion jetzt vor der Hauptpumpe, also saugseitig, eingespeist. Bei dieser Betriebsweise ergaben sich die gleichen Ergebnisse wie in Beispiel 4.

## Beispiel 6

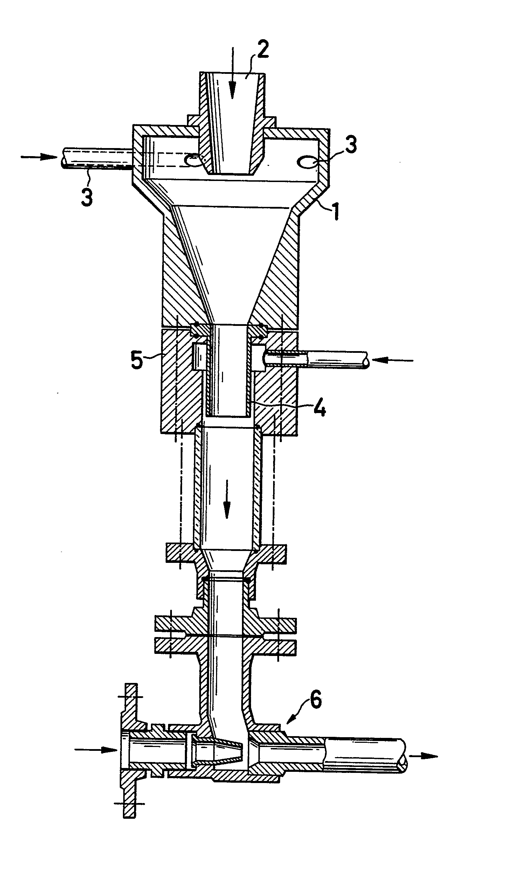

In diesem Beispiel soll gezeigt werden, daß nicht jede beliebige Methode geeignet ist, um brauchbare Hochpolymerlösungen herzustellen.
Für den Versuch wurden 5 kg Polyacrylamid-Pulver entsprechend Polymer I des Beispiels 1 der DE-OS 28 07 709 (90 % Amid, 10 % Wasser) unter Verwendung einer Zahn-Kolloid-Mühle (mit einer Leistung von 500 l/h) in 100 l Wasser gelöst. Der Löseprozeß benötigte rund 10 Minuten. Die erzeugte Lösung war dünnflüssig und ließ sich ohne weiteres aus einem Eimer ausgießen. Die Prüfung der Lösung auf ihre strömungsbeschleunigende Wirkung in der in DE-OS 28 07 709, Figur 1 beschriebenen Apparatur ergab bei einer Verdünnung auf 40 ppm eine Reibungsminderung von 0 %. Das Polyacrylamid war durch Scherabbau beim Lösen völlig zerstört worden.

Eine im Labor unter schonenden Bedingungen erzeugte Lösung gleicher Konzentration wie oben ist eine weiche, gelartige, nicht mehr rührbare Masse, die sich nicht mehr aus einem Eimer ausgießen läßt. Eine mit der erfindungsgemäßen Apparatur hergestellte Lösung von 40 ppm des gleichen Polyacrylamids ergab dagegen in der oben genannten Apparatur bei einer Reynoldszahl Re = 100 000 eine Reibungsminderung von 80 %. Das Polyacrylamid war bei diesem Löseprozeß völlig unversehrt geblieben.

0050312

- 12 -          HOE 80/F 239

<u>Patentansprüche:</u>

1. Vorrichtung zum Dispergieren von Polymerpulvern, dadurch gekennzeichnet, daß sie aus einem Trichter (1) mit zentraler Einfüllöffnung (2), in dessen oberem Teil mindestens eine tangentiale Flüssigkeitszufuhr (3) angeordnet ist, einem Trichterablaufrohr (4) mit Ringdüse (5) und einer anschließenden Strahlpumpe (6) besteht.

2. Vorrichtung nach Anspruch 1, dadurch gekennzeichnet, daß der Ausgang der Strahlpumpe mit einem Diffusor versehen ist.

3. Verfahren zum Lösen von Polymerpulvern, dadurch gekennzeichnet, daß man das Polymerpulver in der Vorrichtung nach Anspruch 1 dispergiert und die Dispersion in einer turbulenten Strömung des Lösemittels auflöst.

0050312

4